# EUROPEAN PATENT APPLICATION

(11) **EP 2 496 030 A1**
(43) Date of publication of application: **05.09.2012**
(21) Application number: 11156448.0
(22) Date of filing: 01.03.2011
(51) Int. Cl.: H04W 56/00, H04W 52/02

(54) **Wireless communication apparatus, wireless communication method, and program**

(71) Applicant: Panasonic Corporation, Kadoma-shi Osaka 571-8501 (JP)
(72) Inventor: Saitou, Junichi, Osaka 540-6207 (JP); Horiike, Yoshio, Osaka 540-6207 (JP)
(74) Representative: Schwabe - Sandmair - Marx

(57) **Abstract**

A wireless communication apparatus (10, 30) according to the present invention transmits a beacon signal for synchronization of a clock, and includes: transmission/reception means (1, 2) for transmitting/receiving a wireless signal; slot control means (4) for controlling a transmission timing of the beacon signal; beacon signal transmission means (3) for transmitting the beacon signal through the transmission/reception means (1, 2) in accordance with control by the slot control means (4); activation signal transmission means (5) for transmitting an activation signal for notifying presence of the wireless communication apparatus, through the transmission/reception means (1, 2) during a period equal to or longer than ten times that of a transmission time of the beacon signal; slave apparatus calling signal reception means (7) for receiving a slave apparatus calling signal through the transmission/reception means (1, 2); and polling signal transmission means (8) for transmitting a polling signal through the transmission/reception means (1, 2).

## Description

### BACKGROUND OF THE INVENTION

### Field of the Invention

The present invention relates to wireless communication apparatuses, a wireless communication method, and a program, which can be used in a wireless system including: a master wireless terminal that transmits a beacon signal; and one or more slave wireless terminals each of which receives the beacon signal to temporally synchronize with the master wireless terminal.

### Description of the Background Art

Communication systems each including a master wireless terminal that transmits a beacon have been used for wireless network systems and the like which are provided by wireless LAN providers and FWA (fixed wireless access) providers. In general, most communication systems are constructed by installing master wireless terminals corresponding to infrastructures, and then by installing slave wireless terminals. As conventional art documents each disclosing a method in which a slave wireless terminal joins a communication system and establishes a connection to a master wireless terminal, there are, for example, Japanese Laid-Open Patent Publication No. 2007-181231 and Japanese Laid-Open Patent Publication No. 2009-135708.

In the method disclosed in Japanese Laid-Open Patent Publication No. 2007-181231, a slave wireless terminal receives the beacon signals transmitted from a plurality of master wireless terminals, transmits a request to join a wireless communication system, to a master wireless terminal in an optimum communication quality state, performs negotiation with the master wireless terminal, and receives an IP address from the master wireless terminal, thereby joining a wireless communication system.

In the method disclosed in Japanese Laid-Open Patent Publication No. 2009-135708, when determining that a beacon signal has not been received from a master wireless terminal within a fixed time period, a slave wireless terminal blocks power supplied to its wireless communication section. According to this method, when the slave wireless terminal cannot confirm presence of the master wireless terminal, the slave wireless terminal stops wireless communication for power saving.

Further, in public mobile communication systems and the like, a method may be used in which, when a slave wireless terminal cannot receive a beacon signal from any master wireless terminal, the slave wireless terminal keeps a continuous reception state until detecting a beacon signal from any master wireless terminal, and joins a communication system to which the master wireless terminal having transmitted the detected beacon signal belongs.

However, the method disclosed in Japanese Laid-Open Patent Publication No. 2007-181231 assumes that master wireless terminals are installed prior to installation of slave wireless terminals. Thus, Japanese Laid-Open Patent Publication No. 2007-181231 does not disclose a method in which, when a slave wireless terminal is installed earlier and a master wireless terminal is installed later, the slave wireless terminal installed earlier joins a communication system to which a master wireless terminal installed later belongs.

In addition, in the method in which the slave wireless terminal keeps a continuous reception state until detecting a beacon signal, and joins a communication system to which a master wireless terminal having transmitted the detected beacon signal belongs, the power consumption the slave wireless terminal is increased since the slave wireless terminal keeps the continuous reception state.

Moreover, Japanese Laid-Open Patent Publication No. 2009-135708 states that wireless communication is stopped when a beacon signal cannot be received from a master wireless terminal, but does not describe how to join a communication system to which a master wireless terminal belongs, when a beacon signal is received from the master wireless terminal later, or when another master wireless terminal is installed.

### SUMMARY OF THE INVENTION

An object of the present invention is to provide wireless communication apparatuses, a wireless communication method, and a program, which allow a slave wireless terminal to immediately join a communication system to which a master wireless terminal belongs, even when the master wireless terminal is installed after the slave wireless terminal is installed, and which can reduce power consumption during a period until the slave wireless terminal joins the communication system.

In order to attain the object mentioned above, a wireless communication apparatus (10, 30) according to the present invention is intended to transmit a beacon signal for synchronization of a clock, and includes: transmission/reception means (1, 2) for transmitting/receiving a wireless signal; slot control means (4) for controlling a transmission timing of the beacon signal; beacon signal transmission means (3) for transmitting the beacon signal through the transmission/reception means (1, 2) in accordance with control by the slot control means (4); activation signal transmission means (5) for transmitting an activation signal for notifying presence of the wireless communication apparatus, through the transmission/reception means (1, 2) during a period that is equal to or longer than ten times that of a transmission time of the beacon signal; slave apparatus calling signal reception means (7) for receiving a slave apparatus calling signal through the transmission/reception means (1, 2); and polling signal transmission means (8) for transmitting a polling signal through the transmission/reception means (1, 2).

According to the configuration, a beacon signal transmission side wireless communication apparatus can notify a beacon signal reception side wireless communication apparatus of presence of the beacon signal transmission side wireless communication apparatus, by using an activation signal. Thus, while the beacon signal reception side wireless communication apparatus cannot receive a beacon signal, a reception interval for detecting an activation signal is lengthened, whereby it is possible to reduce the power consumption of the beacon signal reception side wireless communication apparatus, when the beacon signal transmission side wireless communication apparatus is not operating or is replaced.

The wireless communication apparatus may further include: intermittent reception means (15) for activating the transmission/reception means (1, 2) in a first cycle (T10) to cause the transmission/reception means (1, 2) to perform a reception operation; activation signal reception means (16) for receiving an activation signal transmitted from another wireless communication apparatus, through the transmission/reception means (11, 12) while the transmission/reception means (1, 2) performs the reception operation; beacon signal reception means (13) for, after the activation signal is detected by the activation signal reception means (16), activating the transmission/reception means (11, 12) in a second cycle, and receiving a beacon signal transmitted from the other wireless communication apparatus, through the transmission/reception means (11, 12); slave apparatus calling signal transmission means (18) for transmitting a slave apparatus calling signal through the transmission/reception means (11, 12) to the other wireless communication apparatus; and polling signal reception means (19) for receiving a pollin g signal transmitted from the other wireless communication apparatus, through the transmission/reception means (11, 12).

According to the configuration, a relay apparatus for connecting an upper wireless communication apparatus and a lower wireless communication apparatus can be realized.

The activation signal transmission means (5) may transmit the activation signal when the wireless communication apparatus is powered on.

According to the configuration, immediately after the beacon signal transmission side wireless communication apparatus starts its operation, presence of the beacon signal transmission side wireless communication apparatus can be notified to the beacon signal reception side wireless communication apparatus. Thus, it is possible to cause the beacon signal reception side wireless communication apparatus to early join a communication system to which the beacon signal transmission side wireless communication apparatus belongs.

The activation signal transmission means (5) may repeatedly transmit the activation signal in a third cycle (T12).

According to the configuration, even when the beacon signal reception side wireless communication apparatus fails to receive the activation signal, the apparatus can receive the next activation signal. Thus, it is possible to assuredly cause the beacon signal reception side wireless communication apparatus to join the communication system to which the beacon signal transmission side wireless communication apparatus belongs.

The activation signal transmission means (5) may transmit the activation signal in response to an instruction from the outside.

According to the configuration, the activation signal is transmitted in accordance with an instruction from a center server or the like connected through a network. Thus, it is possible to remotely control the beacon signal reception side wireless communication apparatus to join the communication system to which the beacon signal transmission side wireless communication apparatus belongs.
the slot control means (4), the beacon signal transmission means (3), the activation signal transmission means (5), the slave apparatus calling signal reception means (7), and the polling signal transmission means (8) may be implemented by a computer executing a program.

According to the configuration, a transmission/reception function can be implemented by effectively using a hardware resource for control which is provided in the wireless communication apparatus.

Further, in order to attain the object mentioned above, a wireless communication apparatus (20, 30) according to the present invention is intended to receive a beacon signal for synchronization of a clock, and includes: transmission/reception means (11, 12) for transmitting/receiving a wireless signal; intermittent reception means (15) for activating the transmission/reception means (11, 12) in a first cycle (T10) to cause the transmission/reception means (11, 12) to perform a reception operation; activation signal reception means (16) for receiving an activation signal transmitted from another wireless communication apparatus, through the transmission/reception means (11, 12) while the transmission/reception means (11, 12) performs the reception operation; beacon signal reception means (13) for, after the activation signal is detected by the activation signal reception means (16), activating the transmission/reception means (11, 12) in a second cycle, and receiving the beacon signal through the transmission/reception means (11, 12); slave apparatus calling signal transmission means (18) for transmitting a slave apparatus calling signal through the transmission/reception means (11, 12); and polling signal reception means (19) for receiving a polling signal through the transmission/reception means (11, 12).

According to the configuration, until the activation signal is received, an intermittent reception operation is performed. Thus, the power consumption of the beacon signal reception side wireless communication apparatus can be suppressed.

When the intermittent reception means (15) does not receive the activation signal during a period equal to a integral multiple of the first cycle (T10), the beacon signal reception means (13) may cause the transmission/reception means (11, 12) to operate to continue a beacon signal reception operation for a time longer than an interval of beacon signal transmission.

According to the configuration, when the activation signal cannot be received for a long period of time, a capture operation of the beacon signal is temporarily continuously performed. Thus, even when reception of the activation signal fails, the beacon signal transmitted from the beacon signal transmission side wireless communication apparatus can be assuredly detected.

When the activation signal reception means (16) detects the activation signal, the transmission/reception means (11, 12) may continue the reception operation and the beacon signal reception means (13) may detect the beacon signal.

According to the configuration, the beacon signal can be assuredly detected after the detection of the activation signal.

When the beacon signal is received after detection of the activation signal, the slave apparatus calling signal transmission means (18) may transmit a joining request signal for requesting to join a communication system to which another wireless communication apparatus having transmitted the beacon signal belongs.

According to the configuration, the beacon signal reception side wireless communication apparatus can be caused to join the communication system to which the beacon signal transmission side wireless communication apparatus belongs.

The intermittent reception means (15), the activation signal reception means (16), the beacon signal reception means (13), the slave apparatus calling signal transmission means (18), and the polling signal reception means (19) may be implemented by a computer executing a program.

According to the configuration, a transmission/reception function can be implemented by effectively using a hardware resource for control which is provided in the wireless communication apparatus.

The activation signal may consist of repeated unit blocks each including a preamble signal and an identification signal indicating that the signal is an activation signal.

According to the configuration, it can be identified in a short time whether a received signal is an activation signal, or a signal other than the activation signal or noise. Thus, power saving of the beacon signal reception side wireless communication apparatus is possible.

Further, in order to attain the object mentioned above, a communication system according to the present invention includes any of the above-described wireless communication apparatuses for transmitting a beacon signal and any of the above-described wireless communication apparatuses for receiving a beacon signal.

According to the configuration, until the activation signal is received, an intermittent reception operation is performed. Thus, the power consumption of the beacon signal reception side wireless communication apparatus can be suppressed.

Further, in order to attain the object mentioned above, a wireless communication method according to the present invention is intended to receive a beacon signal for synchronization of a clock, and includes: an intermittent reception step (S126) of intermittently performing a reception operation in a first cycle (T10); an activation signal detection step (S127) of detecting presence or absence of an activation signal transmitted from another wireless communication apparatus, during the reception operation; and a beacon signal reception step (S125) of repeatedly receiving the beacon signal in a second cycle, when the activation signal is detected.

According to the method, until the activation signal is received, an intermittent reception operation is performed. Thus, the power consumption of the beacon signal reception side wireless communication apparatus can be suppressed.

Further, the wireless communication method may further include: a joining request signal transmission step (S123) of transmitting a joining request signal for requesting to join a communication system of the other wireless communication apparatus, when the activation signal is detected; and a response signal reception step (S124) of receiving a response signal transmitted from the other wireless communication apparatus in response to the joining request signal, and after the reception of the response signal, the beacon signal reception step (S125) may be started.

According to the method, after the detection of the activation signal, the beacon signal reception side wireless communication apparatus can be caused to join the communication system to which the beacon signal transmission side wireless communication apparatus belongs.

Further, in order to attain the object mentioned above, a program according to the present invention is intended to cause a wireless communication apparatus (20, 30), including a computer and transmission/reception means (11,12) for transmitting/receiving a wireless signal, to receive a beacon signal for synchronization of a clock. The program causes the computer to operate as: intermittent reception means (15) for activating the transmission/reception means (11, 12) in a first cycle (T10) to cause the transmission/reception means (11, 12) to perform a reception operation; activation signal reception means (16) for receiving an activation signal transmitted from another wireless communication apparatus, through the transmission/reception means (11, 12) while the transmission/reception means (11, 12) performs the reception operation; and beacon signal reception means (13) for, after the activation signal is detected by the activation signal reception means (16), activating the transmission/reception means (11, 12) in a second cycle, and receiving the beacon signal through the transmission/reception means (11,12).

According to the configuration, until the activation signal is received, an intermittent reception operation is performed. Thus, the power consumption of the beacon signal reception side wireless communication apparatus can be suppressed.

As described above, according to the wireless communication apparatuses, the wireless communication method, and the program of the present invention, presence of the beacon signal transmission side wireless communication apparatus can be recognized by the activation signal. Thus, when the beacon signal reception side wireless communication apparatus starts its operation earlier and the beacon signal transmission side wireless communication apparatus starts its operation later, the beacon signal reception side wireless communication apparatus can be caused to join the communication system to which the beacon signal transmission side wireless communication apparatus belongs, while the power consumption is suppressed.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a diagram illustrating an example of a communication system in which wireless communication apparatuses of the present invention are used;
FIG. 2 is diagrams illustrating beacon signal transmission and reception methods executed by the wireless communication apparatuses shown in FIG. 1;
FIG. 3 is diagrams illustrating an example of a slot configuration of the wireless communication apparatuses shown in FIG 1;
FIG 4 is diagrams illustrating an example of a format of a slave apparatus calling signal or a polling signal;
FIG. 5 is a block diagram illustrating a schematic configuration of a wireless communication apparatus of the present invention;
FIG 6 is a block diagram illustrating a schematic configuration of a wireless communication apparatus of the present invention;
FIG 7 is a block diagram illustrating a schematic configuration of a wireless communication apparatus of the present invention;
FIG 8 is diagrams illustrating a method of joining a system, which method is executed by the wireless communication apparatuses of the present invention;
FIG. 9 is diagrams illustrating an example of a format of an activation signal;
FIG. 10 is a diagram illustrating another example of an activation signal transmission method;
FIG. 11 is a flowchart illustrating an example of a control process that is performed by the wireless communication apparatuses shown in FIGS. 5 and 7 after activation;
FIG. 12 is a flowchart illustrating an example of a beacon signal capture process that is performed by the wireless communication apparatuses shown in FIGS. 6 and 7 after activation.

### DESCRIPTION OF THE PREFERRED EMBODIMENTS

### (I. Description of Entire Communication System)

First, a communication system that is constructed using wireless communication apparatuses according to the present invention will be described.

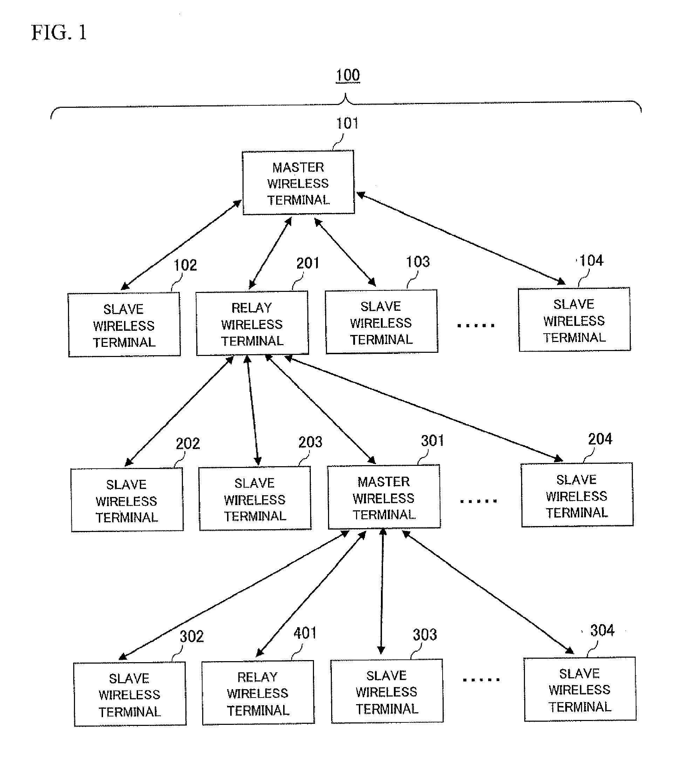

FIG 1 is a diagram illustrating an example of a communication system in which wireless communication apparatuses of the present invention are used. A communication system 100 includes a master wireless terminal 101; slave wireless terminals 102 to 104 that belong to the master wireless terminal 101; a relay wireless terminal 201 that belongs to the master wireless terminal 101; slave wireless terminals 202 to 204 that belong to the relay wireless terminal 201; a relay wireless terminal 301 that belongs to the relay wireless terminal 201; slave wireless terminals 302 to 304 that belong to the relay wireless terminal 301; and a relay wireless terminal 401 that belongs to the relay wireless terminal 301. The master wireless terminal 101 is connected to a center server through a wired or wireless network. Note that some relay wireless terminals and some slave wireless terminals are shown in FIG. 1, but the number of wireless terminals connected to the master wireless terminal 101 and the number of layers of wireless terminals are optional.

Each of the master wireless terminal 101 and the relay wireless terminals 201, 301, and 40 periodically transmits a beacon signal. Each of the slave wireless terminals 102 to 104 and the relay wireless terminal 201, which belong to the master wireless terminal 101, receives a beacon signal transmitted from the master wireless terminal 101 and synchronizes its clock with a clock of the master wireless terminal 101 on the basis of the received beacon signal. Each of the slave wireless terminals 102 to 104 and the relay wireless terminal 201 performs signal reception during a signal transmission period of the master wireless terminal 101, and performs signal transmission during a signal reception period of the master wireless terminal 101. Similarly, each of the slave wireless terminals 202 to 204 and the relay wireless terminal 301, which belong to the relay wireless terminal 201, synchronizes its clock with the clock of the relay wireless terminal 201 on the basis of a beacon signal received from the relay wireless terminal 201, and performs signal transmission and reception to and from the relay wireless terminal 201. Further, each of the slave wireless terminals 302 to 304 and the relay wireless terminal 401, which belong to the relay wireless terminal 301, synchronizes its clock with the clock of the relay wireless terminal 301 on the basis of a beacon signal received from the relay wireless terminal 301, and performs signal transmission and reception to and from the relay wireless terminal 301. Hereinafter, for simplification of explanation, communication between: the master wireless terminal 101; and the slave wireless terminals 102 to 104 and the relay wireless terminal 201, which belong to the master wireless terminal 101, will be mainly described. However, the same applies to communication between: a relay wireless terminal in another layer; and the slave wireless terminals and the relay wireless terminal 301 or 401 that belong to the relay wireless terminal.

### (II. Transmission and Reception Methods of Beacon Signal)

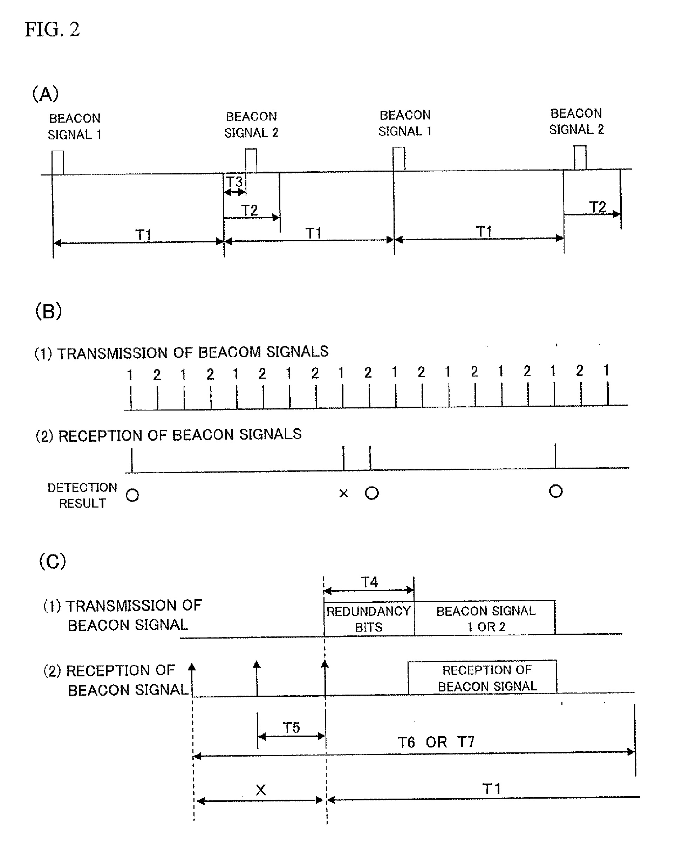

FIG. 2(A) is a diagram illustrating a beacon signal transmission process performed by the wireless communication apparatus 101. As shown in FIG. 2(A), the master wireless terminal 101 alternately transmits a beacon signal 1 and a beacon signal 2.

The beacon signal 1 is transmitted at time intervals of 2 × T1. Meanwhile, the beacon signal 2 is transmitted after a time T1 elapses from transmission of the beacon signal and further a random time T3 (T3 < T2 < T1) elapses. For example, T1 is 4 seconds, T2 is 100 milliseconds, and T3 is n × 10 milliseconds (n is an integer between 0 and 9 and is randomly selected each time the beacon signal 2 is transmitted). In addition, the transmission time of each of the beacon signals 1 and 2 is set so as to be equal to or less than 10 milliseconds.

The slave wireless terminals 102 to 104 and the relay wireless terminal 201 do not know when a beacon signal is transmitted from the master wireless terminal 101, and thus continues a beacon signal reception operation for a predetermined period that is equal to or longer than a time (T1 + T2). When the reception operation is continued for the predetermined period that is equal to or longer than the time (T1 + T2), the beacon signal 1 or the beacon signal 2 can be received without fail. In addition, when the reception operation is continued for the predetermined period that is equal to or longer than the time (T1 + T2), it is considered that a beacon signal is received from any of the relay wireless terminals 201, 301, and 401, other than a beacon signal from the master wireless terminal 101. When receiving a plurality of beacon signals, each of the slave wireless terminals 102 to 104 and the relay wireless terminal 201 adjusts its clock on the basis of a beacon signal of which a level is equal to or higher than a predetermined level and which is transmitted from a wireless terminal of which a relay stage number is lowest. For example, the relay stage number is lower in order of the relay wireless terminal 401, the relay wireless terminal 301, the relay wireless terminal 201, and the master wireless terminal 101. Since the master wireless terminal 101 does not belong to any wireless terminal, the relay stage number of the master wireless terminal 101 is 0.

The beacon signal 2 is transmitted after a time (T1 + T3) from transmission of the beacon signal 1. Thus, in order to synchronize with a timing at which the master wireless terminal 101 transmits the beacon signal 1, on the basis of the beacon signal 2, it is necessary to notify the slave wireless terminals 102 to 104 and the relay wireless terminal 201 of the value of the random time T3. Thus, the master wireless terminal 101 incorporates information indicating the value of the random delay time T3, into the beacon signal 2. Each of the slave wireless terminals 102 to 104 and the relay wireless terminal 201 corrects the time T3 from a reception time of the beacon signal 2 by using the information on the time T3 which is included in the beacon signal 2, and calculates the starting point of the time T1. By performing the process described above, each of the slave wireless terminals 102 to 104 and the relay wireless terminal 201 can synchronize with the beacon signal transmission timing of the master wireless terminal 101 on the basis of the beacon signal 2. Then, each of the slave wireless terminals 102 to 104 and the relay wireless terminal 201 performs an intermittent reception operation at the timing when the beacon signal 1 is transmitted, and receives the beacon signal 1. When initially receiving the beacon signal 1, each of the slave wireless terminals 102 to 104 and the relay wireless terminal 201 synchronizes with the beacon signal transmission of the master wireless terminal 101 on the basis of the received beacon signal 1.

FIG 2(B) is a diagram illustrating a correspondence between transmission of beacon signals by the master wireless terminal 101 and reception of beacon signals by each of the slave wireless terminals 102 to 104 and the relay wireless terminal 201. As shown in FIG 2(B)(1), the master wireless terminal 101 alternately transmits the beacon signal 1 and the beacon signal 2. As shown in FIG 2(B)(2), each of the slave wireless terminals 102 to 104 and the relay wireless terminal 201 performs intermittent reception in cycles each of which is equal to an integral multiple of the transmission cycle of the beacon signal 1. When detecting the beacon signal 1, each of the slave wireless terminals 102 to 104 and the relay wireless terminal 201 performs a detection operation of the beacon signal 1 again at the next intermittent reception timing. When failing to detect the beacon signal 1, each of the slave wireless terminals 102 to 104 and the relay wireless terminal 201 activates at the next transmission timing of the beacon signal 2, receives the beacon signal 2, and performs synchronization again on the basis of the received beacon signal 2. Then, each of the slave wireless terminals 102 to 104 and the relay wireless terminal 201 performs intermittent reception and detects the beacon signal 1.

Here, the case where a plurality of the communication systems shown in FIG. 1 are located adjacently, will be considered. Each system does not synchronize with the others, and a beacon signal transmitted from each system is asynchronous with those from the others. As one example, when the beacon signal transmission interval T1 is 4 seconds and the beacon signal transmission time is 10 milliseconds, the duty ratio of beacon signal transmission is 1/400, and there is a low possibility that a beacon signal transmitted from each system will collide with those from the others. However, the beacon signal transmission interval T1 of each system has a slight clock error, and thus it is considered that the timing of the beacon signal transmitted from each system gradually shifts with time and timings of beacon signal transmission agree with each other at some point.

When the timings of beacon signal transmission agree with each other, the beacon signals 1 collide with each other over a long period of time until the timings shift from each other due to clock errors. However, the beacon signal 2 is transmitted after a delay of the random time T3 from transmission of the beacon signal 1. Thus, even when the beacon signal transmission timing of each system agrees with that of another system, there is a low possibility that the beacon signals 2 will collide with each other. In addition, there is a lower possibility that the beacon signals 2 continuously collide with each other. In other words, even when the transmission timing of the beacon signal 1 of each system agrees with that of another system and the beacon signals 1 continuously collide with each other such that the signals 1 cannot be detected, the beacon signals 2 do not collide with each other, and thus, in each system, each of the slave wireless terminals 102 to 104 and the relay wireless terminal 201 can detect the beacon signal 2 of the master wireless terminal 101 and can synchronize its clock with the clock of the master wireless terminal 101.

FIG. 2(C) is a diagram illustrating a transmission method and a reception method of a beacon signal, FIG. 2(C)(1) illustrates the transmission method in detail, and FIG 2(C)(2) illustrates the reception method in detail.

In transmitting the beacon signal, subsequent to redundancy bits consisting of a repeat of"1010...", the beacon signal 1 or the beacon signal 2 is transmitted. Formats of the beacon signal 1 and the beacon signal 2 are not shown in the drawing, but each of the beacon signal 1 and the beacon signal 2 consists of: a bit synchronization signal consisting of a repeat of " 1010..."; a frame synchronization signal for finding the head of data; and a control signal for clock synchronization. The transmission time of the redundancy bits is T4.

As described above, even when each of the slave wireless terminals 102 to 104 and the relay wireless terminal 201 detects the beacon signal 1 of the master wireless terminal 101 to perform clock synchronization, a slight clock error occurs between the clock of the master wireless terminal 101 and the clock of each of the slave wireless terminals 102 to 104 and the relay wireless terminal 201 until the next beacon signal 1 is received.

In general, a crystal oscillation signal generated by using a crystal oscillator is used as a reference oscillation source for a clock of a wireless terminal. An oscillation frequency error of the crystal oscillator is up to ±100 ppm, when temperature change and the like are taken into consideration. When an oscillation frequency error of a wireless terminal that transmits a beacon signal is up to ±100 ppm and an oscillation frequency error of a wireless terminal that receives a beacon signal is up to ±100 ppm, the relative oscillation frequency error between the beacon signal transmitting terminal and the beacon signal receiving terminal is up to ±200 ppm.

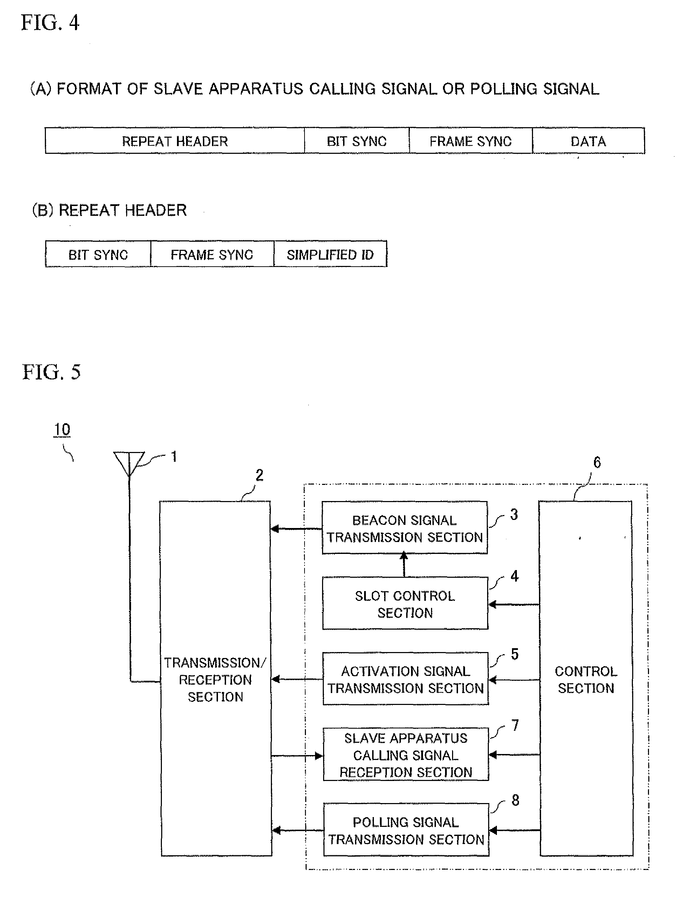

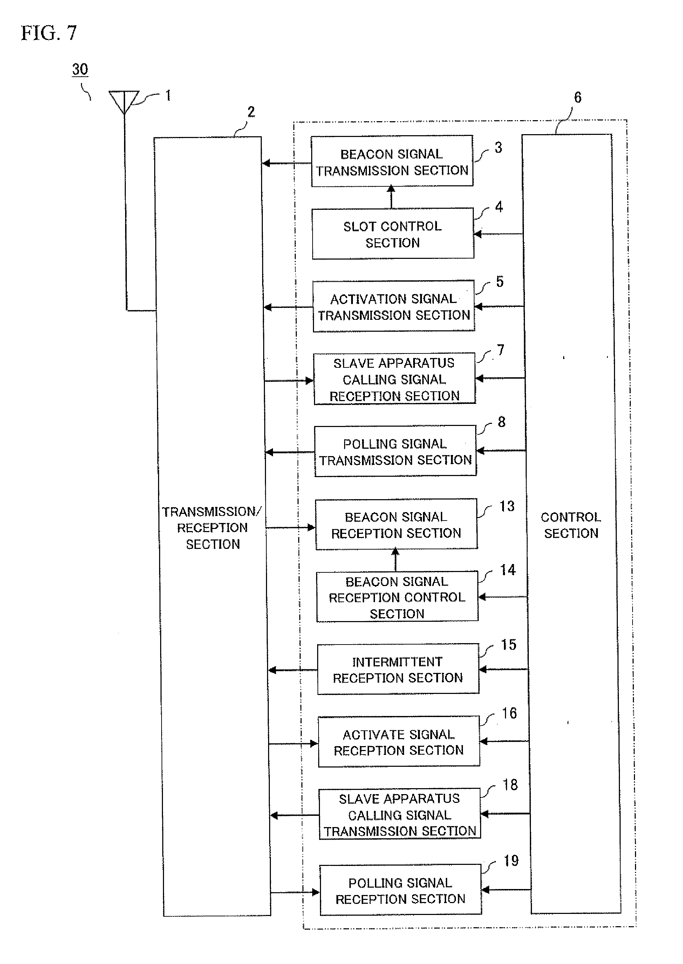

Here, a maximum clock error is denoted by X. The maximum clock error X changes in accordance with a reception cycle in which each of the slave wireless terminals 102 to 104 and the relay wireless terminal 201 receives the beacon signal 1. The reception cycle of the beacon signal 1 is 2 × T1 × N (N is an optional integer), and the maximum clock error is calculated by X = 2 × T1 × N × 200 ppm. Taking into consideration the reception cycle of the beacon signal 1, each of the slave wireless terminals 102 to 104 and the relay wireless terminal 201 powers on its transmission/reception section earlier than the time when the beacon signal 1 is transmitted, by the maximum clock error X, and powers off its transmission/reception section after an elapse of a time-out time T6 from the powering-on. The transmission/reception section (see FIGS. 5 and 7) of each of the slave wireless terminals 102 to 104 and the relay wireless terminal 201 repeats an intermittent reception operation at intervals T5 during the time T6 (T5 < T4).

For example, when: T1 is 4 seconds; the transmission cycle 2 × T1 of the beacon signal 1 is 8 seconds; and the reception cycle in which each of the slave wireless terminals 102 to 104 and the relay wireless terminal 201 receives the beacon signal 1 is 8 × T1 = 32 seconds, the relative clock error for 32 seconds between the master wireless terminal 101 and each of the slave wireless terminals 102 to 104 and the relay wireless terminal 201 is 32 seconds ±200 ppm = ±6.4 milliseconds. In order to assuredly receive the beacon signal 1 even when a clock error of ±6.4 milliseconds occurs, each of the slave wireless terminals 102 to 104 and the relay wireless terminal 201 powers on its transmission/reception section earlier than the time when the beacon signal 1 is transmitted, by 6.4 milliseconds which is the maximum clock error.

Taking into consideration that the clock error is ±X, the time-out time T6 is set so as to satisfy that 2 × X < T6. Each of the slave wireless terminals 102 to 104 and the relay wireless terminal 201 can detect the redundancy bits of the transmission time T4 during the time T6 seconds without fail, and can receive the beacon signal 1. When detecting the redundancy bits of T4, each of the slave wireless terminals 102 to 104 and the relay wireless terminal 201 cancels the time-out time T6 and continues to perform reception. The transmission time of the beacon signal 1 is about 10 milliseconds. Thus, taking into consideration electric current consumption, the maximum clock error X is set so as to be less than 10 milliseconds which is the length of the beacon signal 1. Thus, the time-out time T6 is, at most, twice that of 10 milliseconds which is the length of the beacon signal 1.

Next, the case where the beacon signal 1 is not received and the beacon signal 2 is received, will be considered. The transmission time of the redundancy bits of the beacon signal 2 is also T4. Similarly to the case of receiving the beacon signal 1, in order to absorb the maximum clock error X, each of the slave wireless terminals 102 to 104 and the relay wireless terminal 201 powers on its transmission/reception section earlier than the time when the beacon signal 2 is transmitted, by the maximum clock error X, and sets a time-out time T7. Each of the slave wireless terminals 102 to 104 and the relay wireless terminal 201 repeats an intermittent reception operation at the intervals T5 during the time T7 (T5 < T4). Taking into consideration that the clock error is ±X and the maximum value of the random delay time T3 is T2, the time-out time T7 is set so as to satisfy that (2 × X + T2) < T7. Each of the slave wireless terminals 102 to 104 and the relay wireless terminal 201 can detect the redundancy bits of the transmission time T4 during the time T7 without fail, and can receive the beacon signal 2. The time T2 is up to 90 milliseconds, and the maximum clock error X is about 10 milliseconds. Thus, the time T7 is set at a value slightly greater than 110 milliseconds.

FIG. 2(C) illustrates transmission and reception timings in the case where the relative clock error between: the master wireless terminal 101, which is a beacon signal transmitting terminal; and each of the slave wireless terminals 102 to 104 and the relay wireless terminal 201, each of which is a beacon signal receiving terminal, is zero. In the case where the relative clock error is not zero, the beacon signal transmission timing shifts forward or backward within the clock error ±X with respect to the beacon signal reception timing shown in FIG. 2(C).

By performing intermittent reception at the intervals T5 during the time T6 that is obtained by taking into consideration the relative clock error from the master wireless terminal 101, each of the slave wireless terminals 102 to 104 and the relay wireless terminal 201 can assuredly detect the beacon signal 1 unless the beacon signal 1 collides with any other beacon signals 1. Thus, the time for which the transmission/reception section is ON for receiving the beacon signal 1 can be shortened, and the power consumption can be suppressed.

Then, only when the beacon signal 1 cannot be received during a period due to its collision, each of the slave wireless terminals 102 to 104 and the relay wireless terminal 201 performs intermittent reception at the intervals T5 during the time T7 which is slightly longer than the sum of the relative clock error ±X and the maximum value T2 of the random delay time T3. The number of attempts to receive the beacon signal 2 is much smaller than the number of attempts to receive the beacon signal 1. In addition, even when the beacon signal 2 is received, the intermittent reception is performed at the intervals T5, and thus the influence of the reception of the beacon signal 2 on the entire power consumption is very small.

As described above, even when a plurality of asynchronous systems are located adjacently and beacon signal transmission timings happen to agree with each other, each of the slave wireless terminals 102 to 104 and the relay wireless terminal 201 can synchronize the clock with the clock of the master wireless terminal 101 by using the beacon signal 2. When the beacon signal transmission timings of a plurality of systems do not agree with each other, clock synchronization is performed by using the beacon signal 1 transmitted in constant cycles 2 × T1, and thus the power consumption can be suppressed. In other words, according to the beacon signal transmission and reception methods shown in FIG 2, both improvement of the resistance to interferences and suppression of the power consumption can be achieved.

### (III. Control of Beacon Signal Transmission and Reception Slots)

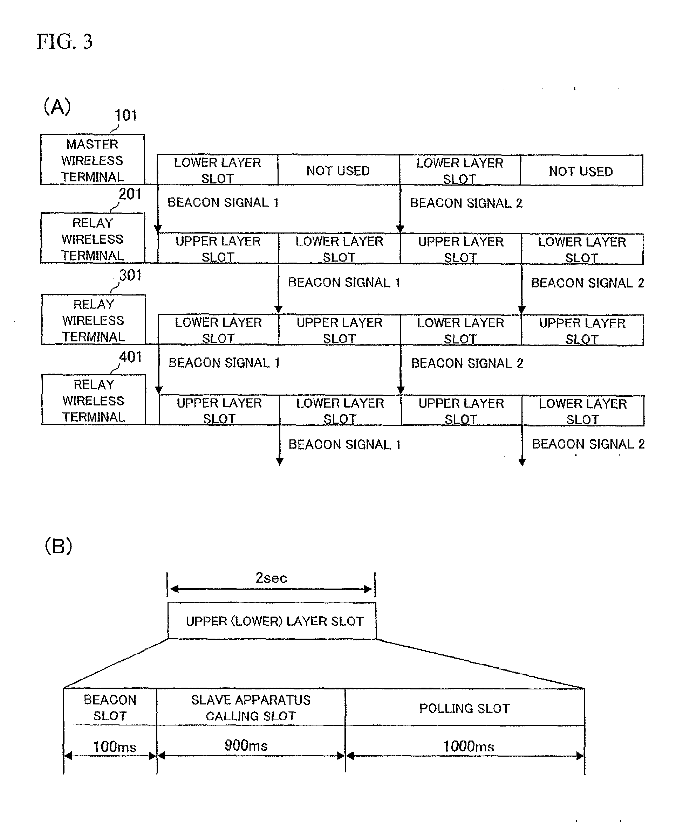

FIG. 3(A) is a diagram illustrating transmission and reception of beacon signals between each layer of the master wireless terminal 101 and the relay wireless terminals 201, 301, and 401, and allocation of time slots.

Two type of slots, upper layer slots for communication with a wireless terminal in an upper layer and lower layer slots for communication with a wireless terminal in a lower layer, are allocated to each wireless terminal. Since the master wireless terminal 101 is in the uppermost layer, only lower layer slots are used in the master wireless terminal 101. The lower layer slots of the master wireless terminal 101 are used for communication with the slave wireless terminals 102 to 104 and the relay wireless terminal 201 among the wireless terminals shown in FIG. 1. Thus, the lower layer slots of the master wireless terminal 101 synchronize with the upper layer slots of the slave wireless terminals 102 to 104 and the relay wireless terminal 201. Similarly, between other layers, the upper layer slots synchronizes with the lower layer slots as shown in FIG. 3(A).

FIG. 3(B) illustrates a configuration of an upper layer (or lower layer) slot. The slot length is, for example, 2 seconds. One slot consists of three slots, namely, a beacon slot, a slave apparatus calling slot, a polling slot. For example, the slot length of the beacon slot is 100 milliseconds, the slot length of the slave apparatus calling slot is 900 milliseconds, and the slot length of the polling slot is 1000 milliseconds. The beacon signal 1 or the beacon signal 2 is transmitted in the beacon slot in a lower layer slot, and received in the beacon slot in an upper layer slot. The beacon signal 1 is transmitted at the head of the beacon slot, and the beacon signal 2 is transmitted at a random timing during 100 milliseconds of the beacon slot.

As shown in FIG 3(A), the master wireless terminal 101 transmits the beacon signal 1 in a lower layer slot, and transmits the beacon signal 2 in the next lower layer slot. The relay wireless terminal 201 receives the transmitted beacon signal 1 in an upper layer slot, and synchronizes its clock with the clock of the master wireless terminal 101 to correct the timing of the slot. The relay wireless terminal 201 transmits the beacon signal 1 in the next lower layer slot. The relay wireless terminal 201 receives the beacon signal 2 in the next upper layer slot, and transmits the beacon signal 2 in the next lower layer slot. In this manner, the beacon signal 1 and the beacon signal 2 are alternately transmitted by using the lower layer slots. Similarly, between other layers, a relay wireless terminal performs clock synchronization on the basis of a beacon signal received from an upper relay wireless terminal, to correct the timing of the slot, and further transmits the beacon signal to a lower relay wireless terminal.

When calling occurs in a wireless terminal and data is transmitted to an upper wireless terminal, a slave apparatus calling signal is transmitted at the head of a slave apparatus calling slot. In order to be able to receive a slave apparatus calling signal from a lower wireless terminal, each of the master wireless terminal 101 and the relay wireless terminals 201, 301, and 401 performs intermittent reception at the head of the slave apparatus calling slot in a lower layer slot, such that the head of the slave apparatus calling slot corresponds to a timing when the slave apparatus calling signal has to be transmitted. At this time, each of the master wireless terminal 101 and the relay wireless terminals 201, 301, and 401 immediately stops reception when determining that there is no slave apparatus calling signal. When receiving a slave apparatus calling signal from a lower wireless terminal, each of the relay wireless terminals 201, 301, and 401 transmits the received slave apparatus calling signal to the upper master wireless terminal 101 or to an upper relay wireless terminal at the head of the slave apparatus calling slot in the next upper layer slot. According to such a procedure, a slave apparatus calling signal generated in the relay wireless terminal 401 can be transmitted to the master wireless terminal 101 1 through the relay wireless terminals 301 and 201.

The case where a polling signal from the master wireless terminal 101 is transmitted to the relay wireless terminal 301, will be described. The master wireless terminal 101 transmits a polling signal at the head of the polling slot in a lower layer slot. In order to be able to receive the polling signal from the master wireless terminal 101, each of the slave wireless terminals 102 to 104 and the relay wireless terminal 201 performs intermittent reception at the head of the polling slot in an upper layer slot, such that the head of the polling slot corresponds to a timing when the polling signal has to be transmitted. Each of the slave wireless terminals 102 to 104 and the relay wireless terminal 201 immediately stops reception when determining that there is no polling signal. The relay wireless terminal 201 having received the polling signal transmits the polling signal at the head of the polling slot in a lower layer slot. Then, by the same procedure, the polling signal from the master wireless terminal 101 is transmitted to a lower slave wireless terminal through the relay wireless terminals 201, 301, and 401.

FIG 4(A) is a diagram illustrating a signal format of a slave apparatus calling signal or a polling signal, FIG 4(B) is a diagram illustrating a unit of a repeat header provided in the signal format in FIG. 4(A).

Each of the slave apparatus calling signal and the polling signal consists of a repeat header, a bit synchronization signal, a frame synchronization signal, and data. The data includes a control signal, an identification code (hereinafter, referred to as "ID") indicating a transmission source and a transmission destination, and the like.

As shown in FIG. 4(B), a unit of the repeat header consists of a bit synchronization signal, a frame synchronization signal, and a simplified ID. The repeat header is used for repeatedly transmitting its elements multiple times. The simplified ID is obtained by simplifying and shortening the ID. For example, the ID is 48 bits, and the simplified ID is the low-order 1 byte (8 bits) of the ID.

Each of the slave wireless terminals 102 to 104, 202 to 204, and 302 to 304 performs a reception operation once while the beacon signal 1 is transmitted multiple times. The beacon signal 1 is received for clock synchronization, and thus it is not necessary to often receive the beacon signal 1.

For example, when the transmission cycle of the beacon signal 1 is 8 seconds and reception is performed once while the beacon signal 1 is transmitted 100 times, the reception cycle is 800 seconds. In contrast, since immediacy is required, the reception cycle of the polling signal is preferably as short as possible. Thus, each of the slave wireless terminals 102 to 104, 202 to 204, and 302 to 304 performs an intermittent reception operation in 4-second cycles each of which is an interval of each upper layer slot.

When it is assumed that each of the slave wireless terminals 102 to 104, 202 to 204, and 302 to 304 is driven by a battery, it is important to suppress the power consumption. Thus, it is preferred that each of the slave wireless terminals 102 to 104, 202 to 204, and 302 to 304 performs a carrier detection operation in the intermittent reception of 4-second cycles, and immediately stops reception when there is no carrier. However, when there is a clock error between a slave wireless terminal and the master wireless terminal 101 or an upper relay wireless terminal, a timing of performing a carrier detection operation and a transmission timing of a polling signal shift from each other in some cases. In such cases, a carrier cannot be detected, and communication fails. In order to avoid this, the repeat header is used.

The transmission time of the repeat header is set so as to be longer than the maximum clock error during the beacon signal reception cycle for performing clock synchronization. In a state where there is no clock error, the reception timing is set such that a carrier is detected in the middle of the repeat header. By so setting, even when a maximum clock error occurs, a carrier can be detected somewhere in the repeat header, and it can be schematically determined, by referring to the simplified ID, whether or not the signal should be received.

In general, each of the relay wireless terminals 201, 301, and 401 and the master wireless terminal 101 is driven by AC power. Thus, it is not necessary to care about the power consumption. However, each of the relay wireless terminals 201, 301, and 401 and the master wireless terminal 101 is configured to detect a carrier at the repeat header, similarly to the slave wireless terminals 102 to 104, 202 to 204, and 302 to 304.

### (IV Configurations of Wireless Communication Apparatuses)

FIG. 5 is a block diagram illustrating a schematic configuration of a wireless communication apparatus of the present invention. A wireless communication apparatus 10 can be used as the master wireless terminal 101 shown in FIG. 1.

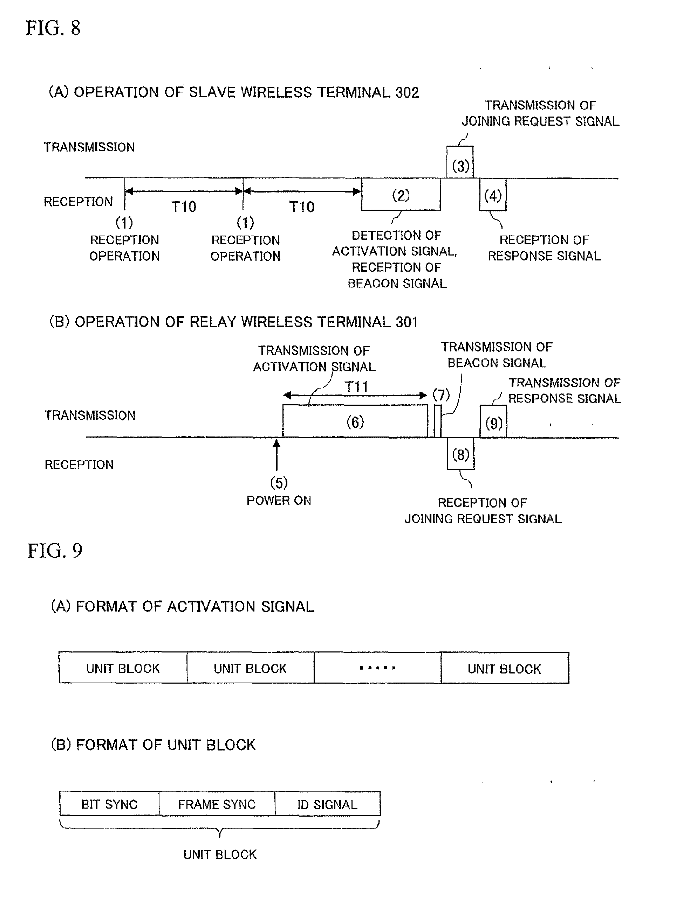

The wireless communication apparatus 10 includes an antenna 1, a transmission/reception section 2, a beacon signal transmission section 3, a slot control section 4, an activation signal transmission section 5, a control section 6, a slave apparatus calling signal reception section 7, and a polling signal transmission section 8. The control section 6 performs time management of the entire wireless communication apparatus 10 and control of each section. The slot control section 4 performs control of slots for transmitting the beacon signal 1 and the beacon signal 2 shown in FIG. 2. The beacon signal transmission section 3 generates the beacon signal 1 and the beacon signal 2, and transmits each of the generated signals at the head of a lower layer slot from the antenna 1 through the transmission/reception section 2 in accordance with control from the slot control section 4. The activation signal transmission section 5 generates an activation signal (FIG. 8) in accordance with an instruction from the control section 6, and transmits the generated activation signal from the antenna 1 through the transmission/reception section 2. The activation signal is transmitted from the activation signal transmission section 5 during a period (6) in FIGS. 7 and 9. The slave apparatus calling signal reception section 7 performs a reception operation at the head of the slave apparatus calling slot in a lower layer slot. As described above, when detecting a slave apparatus calling signal at the head of a slave apparatus calling slot, the slave apparatus calling signal reception section 7 outputs the received slave apparatus calling signal to the control section 6. When not detecting a slave apparatus calling signal, the slave apparatus calling signal reception section 7 stops a reception operation performed by the transmission/reception section 2. When there is transmission data, the polling signal transmission section 8 generates a polling signal in accordance with control from the control section 6, outputs the generated polling signal at the head of the polling slot in a lower layer slot from the antenna 1 through the transmission/reception section 2.

All the function blocks shown in FIG. 5 may be implemented by hardware. Alternatively, a part of the function blocks may be implemented by hardware, and the rest of the function blocks may be implemented by software. For example, the antenna 1 and the transmission/reception section 2 may be configured by hardware, and a portion surrounded by a two-dot chain line in FIG. 5 may be implemented by using a computer provided in the wireless communication apparatus, and by the computer executing a program. The computer includes at least a processor and a memory, and the function of each function block is implemented by the processor executing a program expanded on the memory. Alternatively, a part or all of the function blocks shown in FIG 5 may be implemented by an integrated circuit.

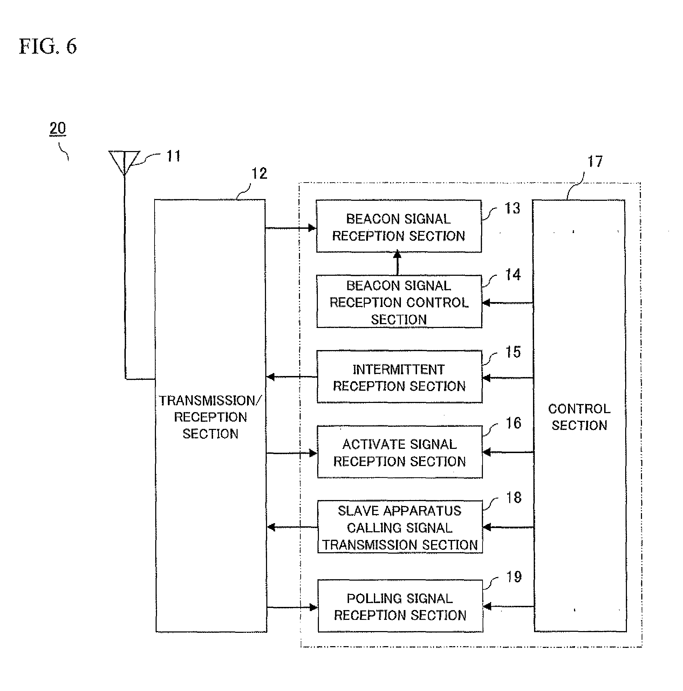

FIG. 6 is a block diagram illustrating a schematic configuration of a wireless communication apparatus (a beacon signal receiving apparatus) of the present invention. A wireless communication apparatus 20 can be used as each of the slave wireless terminals 102 to 104, 202 to 204, and 302 to 304 shown in FIG 1.

The wireless communication apparatus 20 includes an antenna 11, a transmission/reception section 12, a beacon signal reception section 13, a beacon signal reception control section 14, an intermittent reception section 15, an activation signal reception section 16, a control section 17, a slave apparatus calling signal transmission section 18, and a polling signal reception section 19. The control section 17 performs time management of the entire wireless communication apparatus 20 and control of each section. Until an activation signal is detected, the intermittent reception section 15 turns on the transmission/reception section 12 in intermittent reception cycles T10 (FIG. 8), and performs detection of a beacon signal while the transmission/reception section 12 performs a reception operation. The activation signal reception section 16 performs a detection operation of an activation signal when the transmission/reception section 12 turned on by the intermittent reception section 15 performs an intermittent reception operation. When the activation signal reception section 16 receives an activation signal, the control section 17 stops the intermittent reception operation of the intermittent reception section 15, and performs a capture operation of a beacon signal by using the beacon signal reception control section 14 and the beacon signal reception section 13. In accordance with the beacon signal reception method shown in FIG. 2, the beacon signal reception control section 14 causes the beacon signal reception section 13 to perform a beacon signal reception operation at the head of an upper layer slot. The beacon signal reception section 13 turns on the transmission/reception section 12 in accordance with control from the beacon signal reception control section 14, and performs a beacon signal reception operation. When the beacon signal reception section 13 detects a beacon signal, the control section 17 adjusts a clock on the basis of the detected beacon signal. When there is transmission data, the slave apparatus calling signal transmission section 18 generates a slave apparatus calling signal in accordance with an instruction from the control section 17, and outputs the generated slave apparatus calling signal at the head of the slave apparatus calling slot in an upper layer slot from the antenna 11 through the transmission/reception section 12. The polling signal reception section 19 performs a reception operation at the head of the polling slot in an upper layer slot. As described above, when detecting a polling signal at the head of a polling slot, the polling signal reception section 19 outputs the received polling signal to the control section 6. When not detecting a polling signal, the polling signal reception section 19 stops a reception operation performed by the transmission/reception section 12.

All the function blocks shown in FIG. 6 may be implemented by hardware. Alternatively, a part of the function blocks may be implemented by hardware, and the rest of the function blocks may be implemented by software. For example, the antenna 11 and the transmission/reception section 12 may be configured by hardware, and a portion surrounded by a two-dot chain line in FIG 6 may be implemented by using a computer provided in the wireless communication apparatus, and by the computer executing a program. Alternatively, a part or all of the function blocks shown in FIG. 6 may be implemented by an integrated circuit.

FIG 7 is a block diagram illustrating a schematic configuration of a wireless communication apparatus (a beacon signal transmitting/receiving apparatus) of the present invention. A wireless communication apparatus 30 can be used as each of the relay wireless terminals 201, 301, and 401 shown in FIG. 1.

The wireless communication apparatus 30 includes an antenna 1, a transmission/reception section 2, a beacon signal transmission section 3, a slot control section 4, an activation signal transmission section 5, a control section 6, a slave apparatus calling signal reception section 7, and a polling signal transmission section 8, which are the same as those shown in FIG 5, and a beacon signal reception section 13, a beacon signal reception control section 14, an intermittent reception section 15, an activation signal reception section 16, a slave apparatus calling signal transmission section 18, and a polling signal reception section 19, which are the same as those shown in FIG 6. The beacon signal transmission section 3, the slot control section 4, the activation signal transmission section 5, the slave apparatus calling signal reception section 7, and the polling signal transmission section 8 serve to transmit a beacon signal and to communicate with a lower wireless communication apparatus. Meanwhile, the beacon signal reception section 13, the beacon signal reception control section 14, the intermittent reception section 15, the activation signal reception section 16, the slave apparatus calling signal transmission section 18, and the polling signal reception section 19 serve to receive a beacon signal and to communicate with an upper wireless communication apparatus. The function of each block is as described with reference to FIGS. 5 and 6, and thus the repeated description is omitted here.

All the function blocks shown in FIG. 7 may be implemented by hardware. Alternatively, a part of the function blocks may be implemented by hardware, and the rest of the function blocks may be implemented by software. For example, the antenna 1 and the transmission/reception section 2 may be configured by hardware, and a portion surrounded by a two-dot chain line in FIG 7 may be implemented by using a computer provided in the wireless communication apparatus, and by the computer executing a program. Alternatively, a part or all of the function blocks shown in FIG. 7 may be implemented by an integrated circuit.

The wireless communication apparatus 30 shown in FIG 7 can be also used as the master wireless terminal or each slave wireless terminal in FIG 1. When the wireless communication apparatus 30 is used as the master wireless terminal, it suffices to cause at least the antenna 1, the transmission/reception section 2, the beacon signal transmission section 3, the slot control section 4, the activation signal transmission section 5, the control section 6, the slave apparatus calling signal reception section 7, and the polling signal transmission section 8 to operate. Meanwhile, when the wireless communication apparatus 30 is used as each slave wireless terminal, it suffices to cause at least the antenna 1, the transmission/reception section 2, the control section 6, the beacon signal reception section 13, the beacon signal reception control section 14, the intermittent reception section 15, the activation signal reception section 16, the slave apparatus calling signal transmission section 18, and the polling signal reception section 19 to operate.

### (V Method for Slave Wireless Terminal to Join System)

Here, a method for a slave wireless terminal to join a system when the slave wireless terminal starts its operation earlier and a master wireless terminal or a relay wireless terminal starts its operation later, will be described. In the following, the case where the slave wireless terminal 302 shown in FIG. 1 has already operated but the relay wireless terminal 301 shown in FIG. 1 has not operated yet, will be described.

FIG. 8(A) is a sequence diagram illustrating an operation of the slave wireless terminal 302, and FIG. 8(B) is a sequence diagram illustrating an operation of the relay wireless terminal 301.

When the relay wireless terminal 301 has not operated yet and cannot receive a beacon signal from any other wireless terminal apparatuses, the slave wireless terminal 302 cannot receive a beacon signal, and thus performs an intermittent reception operation in the predetermined intermittent reception cycles T10 on the basis of its built-in clock, independently of the clocks of the master wireless terminal 101 and the relay wireless terminal 201.

In FIG 8(A), a period (1) is a period during which the slave wireless terminal 302 performs intermittent reception in the intermittent reception cycles T10. In order to reduce the power consumption, the intermittent reception cycle T10 is set so as to be equal to or longer than ten times that of the signal length of the beacon signal. For example, the beacon signal length is about 10 milliseconds, while the intermittent reception cycle T10 is set at 100 milliseconds. The intermittent reception cycle T10 may be the same as the aforementioned time T1, or may be equal to an integral multiple of the time T1.

When the relay wireless terminal 301 is installed and powered on to start its operation, the relay wireless terminal 301 initially transmits an activation signal. In FIG. 8(B), a time point (5) indicated by an arrow is a time point when the relay wireless terminal 301 is powered on, and a period (6) is a transmission period of the activation signal. The signal length T11 of the activation signal is set so as to be longer than the intermittent reception cycle of the slave wireless terminal 302, namely, so as to satisfy that T11 > T10. Thus, when performing an intermittent reception operation, the slave wireless terminal 302 can receive the activation signal without fail. A period (2) is a reception period after the activation signal is detected by the slave wireless terminal 302. The slave wireless terminal 302 continues a reception operation even when the reception of the activation signal is completed, and performs capture of a beacon signal transmitted from the relay wireless terminal 301 during a period (7) subsequent to the activation signal. When capturing the beacon signal, the slave wireless terminal 302 transmits a joining request signal to the relay wireless terminal 301 during a period (3). When receiving the joining request signal from the slave wireless terminal 302 during a period (8), the relay wireless terminal 301 transmits a response signal for joining permission, allocation of ID, and the like, to the slave wireless terminal 302 during a period (9). By receiving the response signal during a period (4), the slave wireless terminal 302 is connected to the relay wireless terminal 301, whereby the slave wireless terminal 302 can join the communication system in FIG. 1.

The transmission of the joining request signal from the slave wireless terminal 302 during the period (3) is performed in the slave apparatus calling slot shown in FIG 3(B). The transmission of the response signal from the relay wireless terminal 301 during the period (9) is performed in the polling slot shown in FIG 3(B). In addition, when a slave wireless terminal transmits a joining signal in a slave apparatus calling slot and waits for a response in the next slave apparatus calling slot, the master wireless terminal (relay wireless terminal) may transmit a response signal in a slave apparatus calling slot.

FIG 9(A) illustrates a signal format of an activation signal. The activation signal consists of repeated unit blocks. As shown in FIG 9(B), each unit block consists of: a preamble signal called a bit synchronization signal consisting of a repeat of"0" and"1" like "101010..."; a frame synchronization signal indicating the head of data; and an identification signal. The identification signal indicates that the signal is an activation signal.

The identification signal may be any signal as long as it includes information by which a slave wireless terminal having received a signal can identify the signal as an activation signal, such as apparatus type information indicating that the apparatus is a relay wireless terminal or a master wireless terminal.

The code pattern of the frame synchronization signal may be modified to a code pattern unique to the activation signal. In this case, it suffices that a receiving terminal is configured to identify a received signal as an activation signal by detecting the unique code pattern. When a configuration of identifying a received signal as an activation signal on the basis of the code pattern of the frame synchronization signal is used, it is possible to omit the identification signal which follows the frame synchronization signal.

In the aforementioned example, when the relay wireless terminal 301 is powered on, an activation signal is transmitted. However, instead of or in addition to transmitting the activation signal at the time of the powering-on, at least one of the following examples may be used.

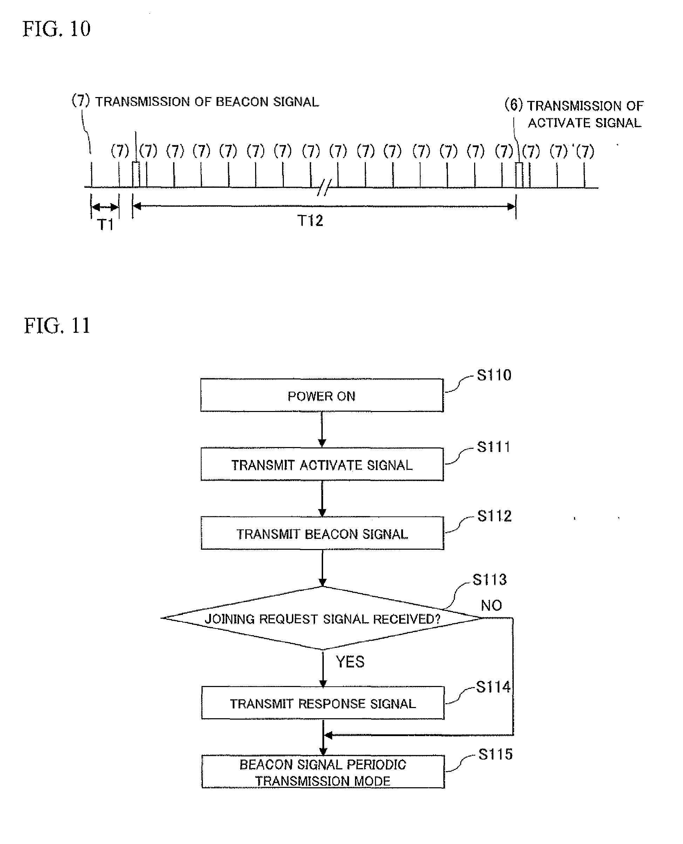

FIG. 10 is a sequence diagram illustrating an example where the relay wireless terminal 301 periodically transmits an activation signal after start of its operation. In FIG 10, a period (7) is a time point when a beacon signal is transmitted once in the time T1. The relay wireless terminal 301 transmits an activation signal during a period (6). T12 is the transmission cycle of the activation signal, and is set so as to be equal to an integral multiple of T1. The transmission cycle T12 of the activation signal is a relatively long time such as one day.

Further, in another example, the relay wireless terminal 301 may be configured to transmit an activation signal when receiving an instruction from the master wireless terminal 101 1 or from a center server (not shown in FIG 1) to which the master wireless terminal 101 is connected.

As shown in FIG. 8(A), the slave wireless terminal 302 performs an intermittent reception operation in the intermittent reception cycles T10 until receiving an activation signal. When not receiving an activation signal during a period equal to an integral multiple of the intermittent reception cycle T10, the slave wireless terminal 302 may perform a reception operation for a time longer than the aforementioned time T1, to attempt to capture a beacon signal.

The wireless communication method has been described by using the relay wireless terminal 301 and the slave wireless terminal 302 with reference to FIGS. 8 to 10. A wireless communication method between the master wireless terminal and the relay wireless terminal, a wireless communication method between the master wireless terminal and each slave wireless terminal, and a wireless communication method between another relay wireless terminal and each relay wireless terminal are the same as that described above.

### (VI. Control Processes Performed by Wireless Communication Apparatuses)

FIG. 11 is a flowchart illustrating an example of a control process performed by the wireless communication apparatuses shown in FIGS. 5 and 7 after activation.

First, when the wireless communication apparatus 10 or 30 is powered on (step S110), the activation signal transmission section 5 transmits an activation signal through the transmission/reception section 2 and the antenna 1 (step S111, the period (6) in FIGS. 8 and 10). After the transmission of the activation signal, the beacon signal transmission section 3 generates a beacon signal, and transmits the generated beacon signal through the transmission/reception section 2 and the antenna 1 in accordance with control from the slot control section 4 (step S112, the period (7) in FIGS. 8 and 10).

After the transmission of the beacon signal is completed, the transmission/reception section 2 shifts to a reception state, and detects presence or absence of a joining request signal in a slave apparatus calling slot (step S113). When Yes at step S113, namely, when the slave apparatus calling signal reception section 7 receives a joining request signal in a slave apparatus calling slot, the polling signal transmission section 8 transmits a response signal in a polling slot (step S114).

When No at step S113, namely, when a joining request signal is not received, the wireless communication apparatus 10 or 30 shifts to a beacon periodic transmission mode (step S115), The beacon periodic transmission mode is a mode of periodically transmitting each of the beacon signal 1 and the beacon signal 2 show in FIG. 2 once in the time T1.

Here, the control process performed when the activation signal is transmitted immediately after the wireless communication apparatus is powered on, has been described. When the activation signal is repeatedly transmitted in the relatively long cycles T12 shown in FIG 10, or when the activation signal is transmitted in response to an instruction from a center server, it suffices that a step of determining when to transmit the activation signal is provided instead of step S111, and then the processes at steps S112 to S116 are performed.

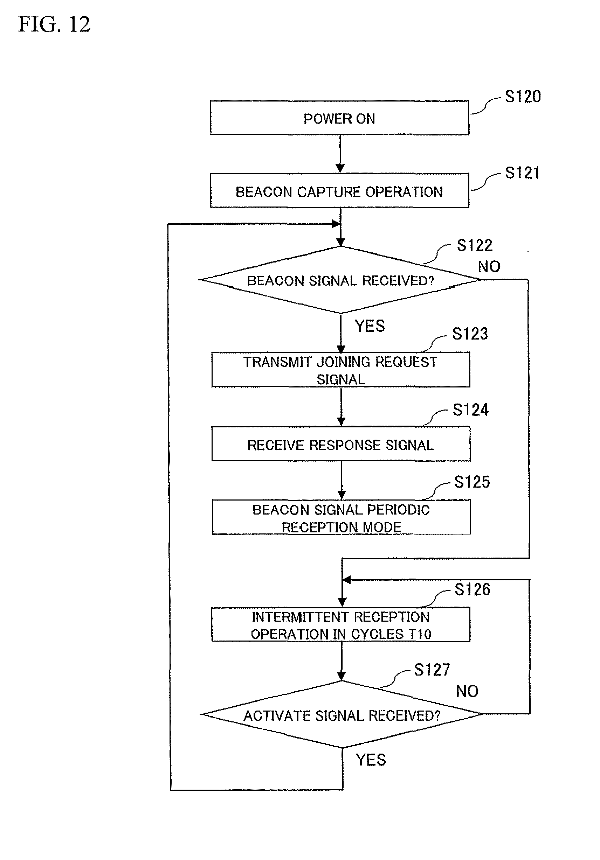

FIG 12 is a flowchart illustrating an example of a beacon signal capture process performed by the wireless communication apparatuses shown in FIGS. 6 and 7 after activation.

First, when the wireless communication apparatus 20 or 30 is powered on (step S120), the transmission/reception means 12 continues a reception operation for a period longer than the time T1, to capture a beacon signal (step S121). During the period when the beacon capture operation is performed at step S121, the beacon signal reception section 13 detects whether or not there is a beacon signal (step S122). When Yes at step S122, namely, when the beacon signal reception section 13 detects a beacon signal, the slave apparatus calling signal transmission section 18 transmits a joining request signal through the transmission/reception section 12 and the antenna 1 (step S123), and shifts to a reception state to receive a response signal (step S124). Thereafter, the wireless communication apparatus 20 or 30 shifts to a beacon periodic reception mode (step S125). The beacon periodic reception mode is a mode of periodically receiving the beacon signal shown in FIG. 2 in synchronization with the beacon signal.

When No at step S122, namely, when the beacon signal reception section 13 does not detect a beacon signal, the intermittent reception section 15 performs an intermittent reception operation in the cycles T10 (step S126). Each time the intermittent reception section 15 performs the intermittent reception operation, the activation signal reception section 16 performs detection of an activation signal (step S127). When Yes at step S127, namely, when the activation signal reception section 16 detects an activation signal, the ON state of the transmission/reception section 12 is kept to continue a reception state. While the reception state is continued, the beacon signal reception section 13 performs the determination at step S122. When No at step S127, namely, when the activation signal reception section 16 does not detect an activation signal, the intermittent reception section 15 returns to step S126 to perform the intermittent reception operation in the cycles T10.

The wireless communication apparatuses and the wireless communication method of the present invention can be used for an automated gas meter reading system and the like. Gas meters are connected to the slave wireless terminals 102 to 104, 202 to 204, and 302 to 304, respectively, shown in FIG. 1, and gas meter reading data of the connected gas meters is collected to the master wireless terminal 101 in response to polling communication from the master wireless terminal 101. The collected gas meter reading data can be transmitted to a center apparatus through a public line connected to the master wireless terminal 101. Each of the relay wireless terminals 201, 301, and 401 may be connected to a gas meter and have a function as a slave wireless terminal, in addition to the relay function between each layer. Although not shown in FIGS. 6 and 7, the wireless communication apparatus 20 or 30 has a connection interface to a meter such as a gas meter, in order to transmit and receive data to and from the meter. Communication between the wireless communication apparatus 20 or 30 and the meter is controlled by a control section.

A gas meter is periodically replaced at a constant period (e.g., 10 years). As a method of constructing an automated gas meter reading system, a procedure is considered in which a slave wireless terminal is installed when a gas meter is replaced, and an infrastructure such as a master wireless terminal and a relay wireless terminal is provided when mounting of the slave wireless terminal to the gas meter proceeds to some extent. In this system construction procedure, it is necessary to cause a slave wireless terminal to join a master wireless terminal or a relay wireless terminal that starts its operation later. Thus, the wireless communication apparatuses, the wireless communication method, and the program of the present invention can be suitably used. In addition, the present invention is suitable for not only the time when a master wireless terminal and a relay wireless terminal are newly installed, but also the time when they are replaced.

As described above, according to the wireless communication apparatuses, the wireless communication method, and the program of the present invention, during a period from start of the operation of a slave wireless terminal to start of the operation of a master wireless terminal, the slave wireless terminal can continue a capture operation of the master wireless terminal while suppressing the power consumption. Immediately after the start of the operation of the master wireless terminal, the slave wireless terminal can capture an activation signal from the master wireless terminal and join a communication system. Thus, the present invention can be used for constructing a communication system by causing a slave wireless terminal to operate earlier and then causing a master wireless terminal and a relay wireless terminal to operate. Specifically, the present invention can be used for automated gas, water, and electric meter reading systems. In particular, the present invention is useful when each slave wireless terminal is driven by a battery.

While the invention has been described in detail, the foregoing description is in all aspects illustrative and not restrictive. It will be understood that numerous other modifications and variations can be devised without departing from the scope of the invention.

## Claims

1. A wireless communication apparatus (10, 30) for transmitting a beacon signal for synchronization of a clock, the wireless communication apparatus comprising:
transmission/reception means (1, 2) for transmitting/receiving a wireless signal;
slot control means (4) for controlling a transmission timing of the beacon signal;
beacon signal transmission means (3) for transmitting the beacon signal through the transmission/reception means (1, 2) in accordance with control by the slot control means (4);
activation signal transmission means (5) for transmitting an activation signal for notifying presence of the wireless communication apparatus, through the transmission/reception means (1, 2) during a period that is equal to or longer than ten times that of a transmission time of the beacon signal;
slave apparatus calling signal reception means (7) for receiving a slave apparatus calling signal through the transmission/reception means (1, 2); and
polling signal transmission means (8) for transmitting a polling signal through the transmission/reception means (1, 2).

2. The wireless communication apparatus according to claim 1, further comprising:
intermittent reception means (15) for activating the transmission/reception means (1, 2) in a first cycle (T10) to cause the transmission/reception means (1, 2) to perform a reception operation;
activation signal reception means (16) for receiving an activation signal transmitted from another wireless communication apparatus, through the transmission/reception means (11, 12) while the transmission/reception means (1, 2) performs the reception operation;
beacon signal reception means (13) for, after the activation signal is detected by the activation signal reception means (16), activating the transmission/reception means (11, 12) in a second cycle, and receiving a beacon signal transmitted from the other wireless communication apparatus, through the transmission/reception means (11, 12);
slave apparatus calling signal transmission means (18) for transmitting a slave apparatus calling signal through the transmission/reception means (11, 12) to the other wireless communication apparatus; and
polling signal reception means (19) for receiving a polling signal transmitted from the other wireless communication apparatus, through the transmission/reception means (11, 12).

3. The wireless communication apparatus according to claim 1 or 2, wherein the activation signal transmission means (5) transmits the activation signal when the wireless communication apparatus is powered on.

4. The wireless communication apparatus according to any one of claims 1 to 3, wherein the activation signal transmission means (5) repeatedly transmits the activation signal in a third cycle (T12).

5. The wireless communication apparatus according to any one of claims 1 to 4, wherein the activation signal transmission means (5) transmits the activation signal in response to an instruction from the outside.

6. The wireless communication apparatus according to any one of claims 1 to 5, wherein the slot control means (4), the beacon signal transmission means (3), the activation signal transmission means (5), the slave apparatus calling signal reception means (7), and the polling signal transmission means (8) are implemented by a computer executing a program.

7. A wireless communication apparatus (20, 30) for receiving a beacon signal for synchronization of a clock, the wireless communication apparatus comprising:
transmission/reception means (11, 12) for transmitting/receiving a wireless signal;
intermittent reception means (15) for activating the transmission/reception means (11,12) in a first cycle (T10) to cause the transmission/reception means (11, 12) to perform a reception operation;
activation signal reception means (16) for receiving an activation signal transmitted from another wireless communication apparatus, through the transmission/reception means (11, 12) while the transmission/reception means (11, 12) performs the reception operation;
beacon signal reception means (13) for, after the activation signal is detected by the activation signal reception means (16), activating the transmission/reception means (11, 12) in a second cycle, and receiving the beacon signal through the transmission/reception means (11, 12);
slave apparatus calling signal transmission means (18) for transmitting a slave apparatus calling signal through the transmission/reception means (11, 12); and
polling signal reception means (19) for receiving a polling signal through the transmission/reception means (11, 12).

8. The wireless communication apparatus according to claim 7, wherein, when the intermittent reception means (15) does not receive the activation signal during a period equal to a integral multiple of the first cycle (T10), the beacon signal reception means (13) causes the transmission/reception means (11, 12) to operate to continue a beacon signal reception operation for a time longer than an interval of beacon signal Transmission.

9. The wireless communication apparatus according to claim 7 or 8, wherein, when the activation signal reception means (16) detects the activation signal, the transmission/reception means (11, 12) continues the reception operation and the beacon signal reception means (13) detects the beacon signal.

10. The wireless communication apparatus according to any one of claims 7 to 9, wherein, when the beacon signal is received after detection of the activation signal, the slave apparatus calling signal transmission means (18) transmits a joining request signal for requesting to join a communication system to which another wireless communication apparatus having transmitted the beacon signal belongs.

11. The wireless communication apparatus according to any one of claims 7 to 10, wherein the intermittent reception means (15), the activation signal reception means (16), the beacon signal reception means (13), the slave apparatus calling signal transmission means (18), and the polling signal reception means (19) are implemented by a computer executing a program.

12. The wireless communication apparatus according to any one of claims 1 to 11, wherein the activation signal consists of repeated unit blocks each including a preamble signal and an identification signal indicating that the signal is an activation signal.

13. A communication system comprising:
at least one wireless communication apparatus according to any one of claims 1 to 6; and
at least one wireless communication apparatus according to any one of claims 7 to 11.

14. A wireless communication method executed for receiving a beacon signal for synchronization of a clock, the wireless communication method comprising:
an intermittent reception step (S126) of intermittently performing a reception operation in a first cycle (T10);
an activation signal detection step (S127) of detecting presence or absence of an activation signal transmitted from another wireless communication apparatus, during the reception operation; and
a beacon signal reception step (S125) of repeatedly receiving the beacon signal in a second cycle, when the activation signal is detected.

15. The wireless communication method according to claim 14, further comprising:
a joining request signal transmission step (S123) of transmitting a joining request signal for requesting to join a communication system to which the other wireless communication apparatus belongs, when the activation signal is detected; and
a response signal reception step (S124) of receiving a response signal transmitted from the other wireless communication apparatus in response to the joining request signal, wherein
after the reception of the response signal, the beacon signal reception step (S125) is started.

16. A program for causing a wireless communication apparatus (20, 30), including a computer and transmission/reception means (11, 12) for transmitting/receiving a wireless signal, to receive a beacon signal for synchronization of a clock, the program causing the computer to operate as:
intermittent reception means (15) for activating the transmission/reception means (11, 12) in a first cycle (T10) to cause the transmission/reception means (11, 12) to perform a reception operation;
activation signal reception means (16) for receiving an activation signal transmitted from another wireless communication apparatus, through the transmission/reception means (11, 12) while the transmission/reception means (11, 12) performs the reception operation; and
beacon signal reception means (13) for, after the activation signal is detected by the activation signal reception means (16), activating the transmission/reception means (11, 12) in a second cycle, and receiving the beacon signal through the transmission/reception means (11, 12).
